# EUROPEAN PATENT APPLICATION

(11) **EP 3 187 992 A1**
(43) Date of publication of application: **05.07.2017**
(21) Application number: 15801305.2
(22) Date of filing: 20.01.2015
(51) Int. Cl.: G06F 3/0481, G06F 3/0484

(54) **INTELLIGENT TERMINAL AND METHOD FOR DISPLAYING APPLICATION ICONS THEREOF**

(30) Priority: 29.08.2014 CN 201410438996
(71) Applicant: Huizhou TCL Mobile Communication Co., Ltd., Huizhou, Guangdong 516006 (CN)
(72) Inventor: GAO, Ke, Huizhou City Guangdong 516006 (CN)
(74) Representative: ZHAOffice SPRL
(86) International application number: PCT/CN2015/071087
(87) International publication number: WO 2016/029634

(57) **Abstract**

A smart terminal and related method for displaying application icons is provided. The method for displaying application icons includes: customizing at least two function modes, and categorizing the application icons displayed on the main interface of a smart terminal into the corresponding function modes; adding and displaying a corresponding shortcut icon for each of the at least two function modes; when to unlock the lock interface, entering the corresponding function mode via the shortcut icon displayed on the lock interface to display the application icons corresponding to the function mode. By the above means, the present disclosure enable the user to rapidly find the application icon currently needed via the shortcut icons of the customized function modes when entering the lock interface, thus enhancing the use efficiency of application programs of the user.

## Description

### FIELD OF THE DISCLOSURE

The present disclosure relates to the field of management and display of application icons, and more particularly, to a smart terminal and an associated method for displaying application icons.

### BACKGROUND OF THE DISCLOURE

With the rapid development of communication and terminal technologies, more and more application programs can be installed freely on a smart terminal. While the variety of application programs, when facilitating people's lives, also disables the user to rapidly find an application program that is currently needed among an application program list or numerous application icons, thus influencing the user's usage of application programs.

### SUMMARY OF THE DISCLOSURE

In view of the above, the technical issue to be solved by embodiments of the present disclosure is to provide a smart terminal and an associated method for displaying application icons to facilitate the quick search for application icons and thus enhance the use efficiency of application programs for the user.

To solve the aforementioned technical problem, a technical solution adopted by the present disclosure follows as below: to provide a method for displaying application icons, including: customizing at least two function modes, and categorizing the application icons displayed on the main interface of a smart terminal into the corresponding function modes; adding and displaying, on the lock interface of the smart terminal, a corresponding shortcut icon for each of the at least two function modes, wherein the shortcut icon displayed on the lock interface may be clicked and selected to display an application icons list or to enter the main interface, and the application icon displayed on the application icons list or the main interface may be selected and moved to the region where the shortcut icon corresponding to the function mode is located so as to categorize the application icon into the corresponding function mode; when to unlock the lock interface, entering the corresponding function mode via the shortcut icon displayed on the lock interface in order to display the application icons corresponding to the function mode; displaying the application icons displayed on the main interface that are not categorized directly on the lock interface, where the application icons may include icons corresponding to various application programs installed on the smart terminal, and to various folders and files contained in the folders.

The lock interface may further display a mode addition icon, and the method further includes: clicking to select the mode addition icon to add a function mode to the lock interface.

In order to solve the above technical problem, another technical solution adopted by the present disclosure follows as below: to provide a method for displaying application icons, including: customizing at least two function modes, and categorizing the application icons displayed on the main interface of a smart terminal into the corresponding function modes; adding and displaying, on the lock interface of a smart terminal, a corresponding shortcut icon for each of the at least two function modes; when to unlock the lock interface, entering the corresponding function mode via the shortcut icon displayed on the lock interface to display the application icons corresponding to the function mode.

Categorizing the application icons displayed on the main interface of the smart terminal into the corresponding function modes may include: clicking to select a shortcut icon displayed on the lock interface to display an application icons list or to enter the main interface; selecting an application icon displayed on the application icons list or the main interface, and moving the application icon to the region where the shortcut icon corresponding to the function mode is located.

The lock interface may further display a mode addition icon, and the method may further include: clicking to select the mode addition icon to add a function mode to the lock interface.

The method may further include: setting up the lock interface to display an uncategorized mode icon, which may include the application icons displayed on the main interface that are not categorized.

The method may further include: displaying the application icons displayed on the main interface that are not categorized directly on the lock interface.

In order to solve the above technical problem, yet another technical solution adopted by the present disclosure follows as below: to provide a smart terminal, the smart terminal comprising: a categorization module configured to customize at least two function modes to categorize the application icons displayed on the main interface of the smart terminal into the corresponding function modes; a processing module configured to add a corresponding shortcut icon for each of the at least two function modes; a display module configured to display the shortcut icons added by the processing module; wherein the processing module may also be configured to, when to unlock the lock interface, enter the corresponding function mode via the shortcut icon displayed on the lock interface to control the display module to display the application icons corresponding to the function mode.

The processing module may be configured to acquire the shortcut icon displayed on the lock interface that is clicked and selected and control the display module to display an application icons list or to display the main interface; the processing module may further be configured to acquire a selected application icon displayed on the list or on the main interface, and control the display module to display an animation depicting the process of moving the selected application icon to the region where the shortcut icon corresponding to the function mode is located.

The processing module may also be configured to control the display module to display a mode addition icon on the lock interface, and configured to acquire the information of the mode addition icon being clicked and selected and thereby add a function mode to the lock interface.

The processing module may further be configured to control the display module to display an uncategorized mode icon on the lock interface, wherein the uncategorized mode icon may include the application icons displayed on the main interface that are not categorized.

The processing module may further be configured to control the display module to display the application icons displayed on the main interface that are not categorized directly on the lock interface.

By the above technical solution, embodiments of the present disclosure may have the following beneficial effects: embodiments of the present disclosure categorize the application icons displayed on the main interface of a smart terminal into corresponding customized function modes, and display on the lock interface an added shortcut icon corresponding to the function mode, thus obviating the need of entering the main interface via the lock interface while enabling the quick search for the application icons currently needed through various shortcut icons displayed on the lock interface, thereby enhancing the use efficiency of application programs for the user.

### BRIEF DESCRIPTION OF THE DRAWINGS

FIG. 1 is a flow chart illustrating a method for displaying application icons according to a first embodiment of the present disclosure.
FIG. 2 illustrates a lock interface obtained by adopting the method as shown in FIG. 1 according to an embodiment of the present disclosure.
FIG. 3 is a block diagram illustrating a smart terminal according to a preferred embodiment of the present disclosure.

### DETAILED DESCRIPTION OF THE DISCLOSURE

Below a definite and complete description will be made on technical solutions according to embodiments of the present disclosure with reference to the accompanying drawings of embodiments of the present disclosure. Apparently, the described embodiments are merely some but not all of the embodiments of the present disclosure. Based on the embodiments of the present disclosure, all other embodiments obtained by one of ordinary skill in the art without making inventive effort shall all fall within the protection scope of the present disclosure.

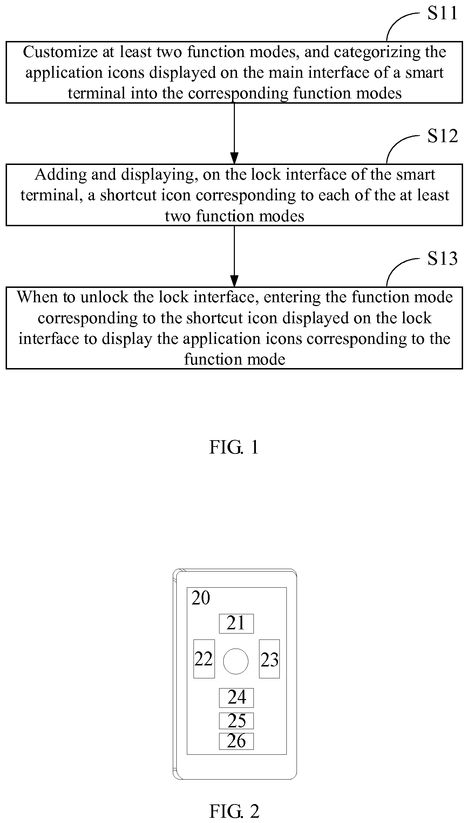

FIG. 1 is a flow chart illustrating a method for displaying application icons according to a first embodiment of the present disclosure. Referring now to FIG. 1, the method according to this embodiment may include the following steps:
Step S11: customizing at least two function modes and categorizing application icons displayed on the main interface of a smart terminal into the corresponding function modes.

Preferably, this embodiment may customize various function modes based on functions of the application programs installed on the smart terminal. The at least two function modes can be, for example, as shown in FIG. 2, a work mode 21, a living mode 22, a shopping mode 23, an entertainment mode 24, and so on. In addition, the lock interface 20 may further display a mode addition icon 25 as shown in FIG. 2. The user may click to select the mode addition icon 25 and thus add a function mode to the lock interface 20.

The circle in the unlock interface 20 as shown in FIG. 2 may represent an unlock button.

It should be noted that, application programs in the present embodiment may include not only various application programs having been installed on the smart terminal, but also various folders that are stored in the smart terminal and files contained therein such as, for example, video files, picture files and so on.

Step S12: adding and displaying, on the lock interface of the smart terminal, a corresponding shortcut icon for each of the at least two function modes.

As is shown in FIG. 2, the various shortcut icons may be analogous to the application icons. The user may click on a shortcut icon to enter a display interface of the corresponding function mode. Preferably, a different function mode may be added with an icon pattern corresponding to the function of the function mode. In other embodiments, certainly, various shortcut icons may be set up as rectangular configurations, and thumbnails of the application icons categorized into the function mode may be displayed in the rectangular configuration.

Step S13: when to unlock the lock interface, entering the function mode corresponding to the shortcut icon displayed on the lock interface to display the application icons corresponding to the function mode.

The user may click the shortcut icon shown in the lock interface 20 as shown in FIG. 2 and thus enter the interface corresponding to the function mode. The display interface of the function mode may resemble the main interface of the smart terminal, while the number of application icons displayed on the display interface is smaller than the number of application icons displayed on the main interface, thus facilitating the user to rapidly find the application icon currently needed, thereby enhancing the use efficiency of application programs.

A method for displaying application icons according to a second embodiment is further provided by the present disclosure, which will be described on the basis of the first embodiment. Considering the case that the user may, after first customizing the function modes, again categorize the reinstalled or original application icons, the second embodiment is different from the first embodiment in that,
the step of categorizing the application icons displayed on the main interface of the smart terminal into the corresponding function modes according to the present embodiment comprises:
clicking, by the user, to select a shortcut icon displayed on the lock interface 20, and displaying an application icons list on the lock interface 20. The user may select an application icon shown in the list and move the application icon to the region where the shortcut icon corresponding to the function mode is located, and thus complete the re-categorization.

Alternatively, the user may click to select a shortcut icon displayed on the lock interface 20, and the smart terminal may switch to a main interface. The user may select an application icon displayed on the main interface and drag the application icon to the region in the main interface where the shortcut icon corresponding to the function mode is located, and thus complete the re-categorization. During the moving process, the user's finger that is used to click to select the shortcut icon remains consistent with the main interface (screen) of the smart terminal.

A method for displaying application icons according to a third embodiment is further provided by the present disclosure, which will be described on the basis of the first embodiment or the second embodiment. Considering the case that the user may, when customizing the function modes, not categorize all the application icons displayed on the main interface, the third embodiment differs from the first embodiment or the second embodiment in that,
the lock interface 20 may further display an uncategorized mode icon 26 as shown in FIG. 2 according to the present embodiment. The uncategorized mode icon 26 may include the application icons displayed on the main interface of the smart terminal that are not categorized. Specifically, the uncategorized mode icon 26 may be disposed to be a rectangular configuration wherein the uncategorized application icons may be displayed.

Based on the third embodiment, the present disclosure further provides a method for displaying application icons according to a fourth embodiment, which differs from the third embodiment in that, the uncategorized application icons displayed on the main interface are directly displayed on the lock interface 20 according to the fourth embodiment.

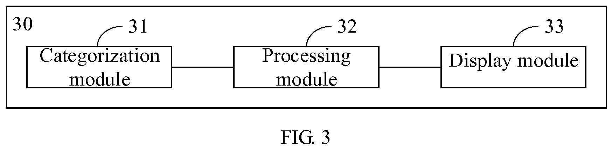

FIG. 3 is a block diagram illustrating a smart terminal according to a preferred embodiment of the present disclosure. Referring now to FIG. 3, the smart terminal 30 includes a categorization module 31, a processing module 32 and a display module 33.

The categorization module 31 may be configured to customize at least two function modes, and categorize the application icons displayed on the main interface of a smart terminal into the corresponding function modes.

The processing module 32 may be configured to add on the lock interface of the smart terminal 30 a corresponding shortcut icon for each of the at least two function modes. The display module 33 may be configured to display the shortcut icons added by the processing module 32. Specifically, the processing module 32 may acquire the shortcut icon displayed on the lock interface that is clicked and selected, and control the display module 33 to display an application icons list or to display the main interface. The processing module 32 may further acquire a selected application icon displayed on the list or the main interface, and control the display module 33 to display an animation depicting the process of moving the selected application icon to a region where the shortcut icon corresponding to the function mode is located.

The processing module 32 may also be configured to control the display module 33 to display a mode addition icon on the lock interface, and configured to acquire the information of the mode addition icon being clicked and selected, and thereby add a function mode to the lock interface.

The processing module 32 may also be configured to control the display module 33 to display an uncategorized mode icon on the lock interface. The uncategorized mode icon may include the application icons displayed on the main interface that are not categorized. Alternatively, the processing module 32 may control the display module 33 to display the uncategorized application icons displayed on the main interface directly on the lock interface.

The processing module 32 may also be configured to, when to unlock the lock interface, enter the function mode corresponding to the shortcut icon displayed on the lock interface, and control the display module 33 to display the application icons corresponding to the function mode.

In the present embodiment, the categorization module 31, the processing module 32 and the display module 33 of the smart terminal 30 correspondingly execute the methods for displaying application icons discussed in the afore first embodiment through the fourth embodiment. Thus, the present embodiment may have the same technical effects with the first embodiment through the fourth embodiment.

It should be understood that, the embodiment of the smart terminal 30 described above are merely illustrative. And division of the modules described represents only the division based on logical functions, and there may be other division manners in practical implementations; for example, multiple modules may be combined into or integrated into another system, or some features may be omitted or may not be implemented. Additionally, the couplings or communication connections between modules may be implemented via some interfaces, and may also be in an electrical form or in other forms.

The various functional modules as constituent parts of the smart terminal 30 may be or may not be physical blocks, and may be co-located at a same place, or may also be distributed among multiple network units. They may be implemented in the form of software functional blocks, and may also be implemented in the form of hardware, for example, the display module 33 may be implemented as a touch screen. One of ordinary skill in the art may select part or all of the modules to achieve the objective of the solution according to the present disclosure.

In addition, the smart terminal mentioned throughout the description of the embodiments of the present disclosure is taken as a smartphone for example, and, certainly, may not be limited thereto. It can be any terminal needing icon management, including a PDA (personal digital assistant), a tablet computer, and so on, and even a smart wristband.

In conclusion, embodiments of the present disclosure categorize the application icons displayed on the main interface of a smart terminal into the corresponding customized function modes, and display an added shortcut icon corresponding to each of the function modes on the lock interface, thus obviating the need of entering the main interface via the lock interface while enabling the quick search for the application icons currently needed through the various shortcut icons displayed on the lock interface, thereby enhancing the use efficiency of application programs for the user.

Again, what is described above is merely embodiments of the present disclosure, thus shouldn't be construed to be limiting the patent scope of the present disclosure. Any equivalent structures or equivalent process flow modifications that are made according to the specification and the attached drawings of the present disclosure (for example, combination of technical features of various embodiments), or any direct or indirect applications of the present disclosure in other related technical fields shall all be covered within the scope of the present disclosure.

## Claims

1. A method for displaying application icons, the method comprising:
customizing at least two function modes, and categorizing a plurality of application icons displayed on a main interface of a smart terminal into the corresponding function modes;
adding and displaying, on a lock interface of the smart terminal, a shortcut icon for each of the at least two function modes, wherein the shortcut icon displayed on the lock interface is clicked and selected to display an application icons list or to enter the main interface, selecting the application icon displayed on the list or on the main interface, and moving the application icon to a region where the shortcut icon corresponding to the function mode is located to categorize the application icon into the corresponding function mode;
when to unlock the lock interface, entering the function mode corresponding to the shortcut icon displayed on the lock interface to display the application icons corresponding to the function mode;
displaying the application icons displayed on the main interface that are not categorized directly on the lock interface, wherein the application icons comprise icons corresponding to various application programs installed on the smart terminal, and to various folders and files contained therein.

2. The method according to claim 1, wherein the lock interface further displays a mode addition icon, the method further comprising:
clicking to select the mode addition icon to add a function mode to the lock interface.

3. A method for displaying application icons, the method comprising:
customizing at least two function modes, and categorizing a plurality of application icons displayed on a main interface of a smart terminal into the corresponding function modes;
adding and displaying, on a lock interface of the smart terminal, a corresponding shortcut icon for each of the at least two function modes;
when to unlock the lock interface, entering the function mode corresponding to the shortcut icon displayed on the lock interface to display the application icons corresponding to the function mode.

4. The method according to claim 3, wherein the categorizing the application icons displayed on the main interface of the smart terminal into the corresponding function modes comprises:
clicking to select the shortcut icon displayed on the lock interface to display an application icons list or to enter the main interface;
selecting the application icon displayed on the list or the main interface, and moving the application icon to a region where the shortcut icon corresponding to the function mode is located.

5. The method according to claim 4, wherein the lock interface further displays a mode addition icon, the method further comprising:
clicking to select the mode addition icon to add a function mode to the lock interface.

6. The method according to claim 3, further comprising:
setting the lock interface to display an uncategorized mode icon which comprises the application icons displayed on the main interface that are not categorized.

7. The method according to claim 3, further comprising:
displaying the application icons displayed on the main interface that are not categorized directly on the lock interface.

8. A smart terminal, comprising:
a categorization module configured to customize at least two function modes, and categorize application icons displayed on a main interface of the smart terminal into the corresponding function modes.
a processing module configured to add, on a lock interface of the smart terminal, a corresponding shortcut icon for each of the at least two function modes;
a display module configured to display the shortcut icons added by the processing module;
wherein the processing module is further configured to, when to unlock the lock interface, enter the function mode corresponding to the shortcut icon displayed on the lock interface, and control the display module to display the application icons corresponding to the function mode.

9. The smart terminal according to claim 8, wherein the processing module is configured to acquire the shortcut icon displayed on the lock interface that is clicked and selected, and control the display module to display an application icons list or to enter the main interface; the processing module is further configured to acquire a selected application icon displayed on the list or the main interface, and control the display module to display an animation depicting the process of moving the selected application icon to a region where the shortcut icon corresponding to the function mode is located.

10. The smart terminal according to claim 9, wherein the processing module is further configured to control the display module to display a mode addition icon on the lock interface, and configured to acquire information of the mode addition icon being clicked and selected and thus add a function mode to the lock interface.

11. The smart terminal according to claim 8, wherein the processing module is further configured to control the display module to display an uncategorized mode icon on the lock interface, the uncategorized mode icon comprising the application icons displayed on the main interface that are not categorized.

12. The smart terminal according to claim 8, wherein the processing module is further configured to control the display module to display the application icons displayed on the main interface that are not categorized directly on the lock interface.
